# EUROPEAN PATENT APPLICATION

(11) **EP 2 228 975 A1**
(43) Date of publication of application: **15.09.2010**
(21) Application number: 09161699.5
(22) Date of filing: 02.06.2009
(51) Int. Cl.: H04M 1/247, H04M 1/253

(54) **System and method for accessing internet protocol phone based applications**

(30) Priority: 11.03.2009 US 381362
(71) Applicant: Mitel Networks Corporation, Ottawa, Ontario K2K 2W7 (CA)
(72) Inventor: Couse, Peter F., Ottawa Ontario K2C 0G5 (CA); Wellard, Ronald G., Ottawa Ontario K0A 1T0 (CA)
(74) Representative: Derry, Paul Stefan

(57) **Abstract**

A system and method for accessing internet protocol (IP) phone based applications in an IP phone is disclosed. The method includes displaying a sidebar display on a graphical user interface (GUI) of the IP phone. The sidebar display is visible while an IP phone based application is displayed adjacent the sidebar display on the GUI. A plurality of quick access icons located in the sidebar display are displayed. Each quick access icon is configured to be activated to open at least one IP phone based application for display on the GUI. The context of each opened IP phone based application is preserved when another of the plurality of applications is selected using its quick access icon for display in the GUI to enable multiple IP phone based applications to operate simultaneously.

## Description

The specification relates to a system and method for accessing Internet protocol phone based applications.

Modern Internet Protocol (IP) phones offer a variety of utilities such as a call log, a phonebook, a corporate directory, a conference bridge controller, a visual voicemail listing, utilities to select phone settings, and so forth. A user typically accesses these features by navigating through a menu tree to open a desired utility. Once the user has selected a particular application, to access a different application the user usually has to navigate back up the menu tree, and then down the menu tree again. In a graphical user interface (GUI), this typically involves opening several windows to find a particular application. This access method is time consuming and inefficient.

In addition, IP phones often have automated macros that are designed to operate based upon certain events. These automated macros can disrupt the operation of an application. In some cases data can even be lost. For example, a phone call may be received while a user is entering data into a phonebook application. Upon reception of the phone call at the IP phone, an automated macro can replace the phonebook application with a phone call application configured to allow the user to receive information about who is calling and enable the user to determine whether they want to take the call or forward the call to voice mail or to another user. Data that was being entered into the phonebook application may be lost if the entry was not saved prior to the automated activation of the phone call application.

Features and advantages of the invention will be apparent from the detailed description which follows, taken in conjunction with the accompanying drawings, which together illustrate, by way of example, features of the invention; and, wherein:
FIG. 1 illustrates an IP phone having a display screen of an IP phone having a sidebar display in accordance with an embodiment of the present invention;
FIG. 2 illustrates a graphical user interface located adjacent the sidebar display on the display screen of FIG. 1;
FIG. 3 illustrates a process for switching between IP phone applications using quick access icons located in the sidebar display of FIG. 1 in accordance with an embodiment of the present invention;
FIG. 4 illustrates an IP phone network including call controllers to enable a user's IP phone setup for quick access icons to be recalled on an IP phone at separate locations of an IP phone network in accordance with an embodiment of the present invention; and
FIG. 5 depicts a flow chart for a method for accessing IP phone based applications in an IP phone in accordance with an embodiment of the present invention.

Reference will now be made to the exemplary embodiments illustrated, and specific language will be used herein to describe the same. It will nevertheless be understood that no limitation of the scope of the invention is thereby intended.

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular embodiments only and is not intended to be limiting.

It should be understood that many of the functional units described in this specification have been labelled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

Furthermore, the described features, structures, or characteristics may be combined in any suitable manner in one or more embodiments. In the following description, numerous specific details are provided, such as examples of materials, fasteners, sizes, lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical range endpoint by providing that a given value may be "a little above" or "a little below" the endpoint.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

While the use of a graphical user interface (GUI) provides a more artistic means of accessing applications on an IP phone, the use of such an interface has not solved the problem of being able to quickly access different applications that are located in separate parts of a menu tree.

In accordance with one embodiment of the present invention, a system for accessing internet protocol (IP) phone based applications on an IP phone is disclosed that enables a user to quickly access selected applications. The system includes a sidebar display on the graphical user interface of an IP phone. The sidebar display is configured to be visible in the graphical user interface substantially all of the time. One or more quick access icons are located in the sidebar display area. Each quick access icon is configured to be activated to open at least one IP phone based application for display on the GUI. The quick access icons are visible and accessible while IP phone applications are displayed within the GUI at a location adjacent the sidebar. The quick access icons can be used to open or display IP phone based applications independent of their location on a menu tree.

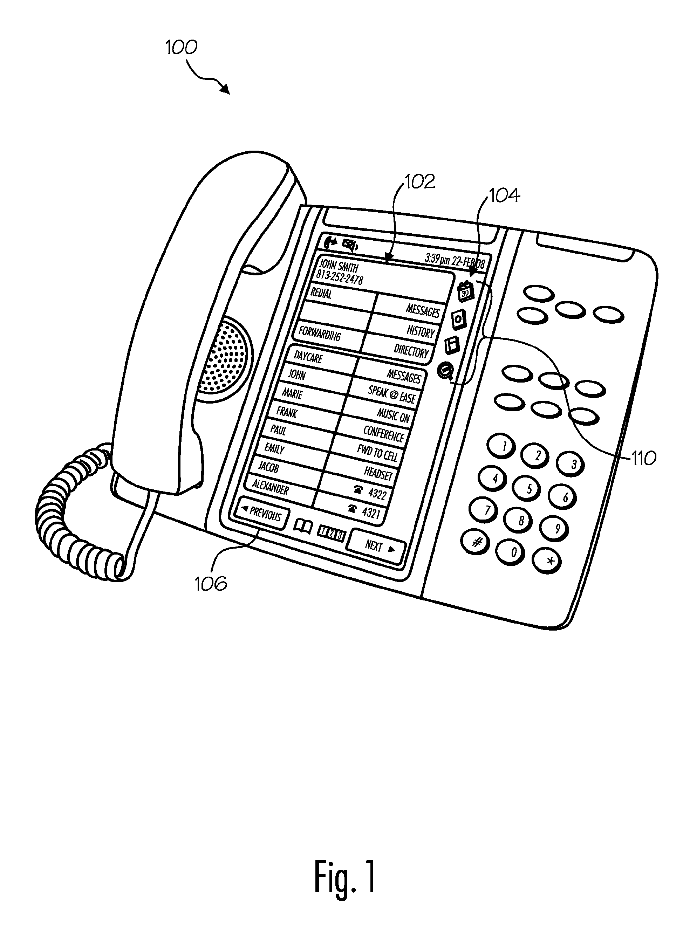

For example, FIG. 1 provides an illustration of one example of an IP phone 100 having a display screen 106 that is electronically coupled to the IP phone. A graphical user interface 102 with a sidebar display 104 is shown on the display screen. The display screen may be a touch style screen, in which a user can interact with the GUI by touching selected locations on the screen or using a stylus to contact the screen. Alternatively, the display screen can be a standard display screen with buttons located adjacent the screen. In this case, the user can interact with the GUI using the adjacent buttons.

The sidebar display 104 is shown located on a right side of the display screen. This location may be preferable for a user that is right handed. Alternatively, the sidebar display may be located on a left side of the screen, or at the top or bottom sides of the screen. In one embodiment, the location of the sidebar may be user selectable.

A plurality of quick access icons 110 is located within the sidebar display 104. Each quick access icon can be activated by selecting the icon using a touch screen, or alternatively using buttons adjacent to the screen 106. When a quick access icon is activated, at least one IP phone based application associated with the icon can be displayed adjacent the sidebar on the GUI 102. For example, the icons shown in FIG. 1 may be used to display IP phone based applications such as the graphical user interface used to make and receive phone calls on the IP phone, which is referred to herein as the IP phone GUI. Icons can also be displayed that are associated with a contacts application, a corporate directory application, a conference bridge application, a call history application, a visual voice mail application, a call forwarding application, a device settings application, a conference unit control application, a help application, and so forth.

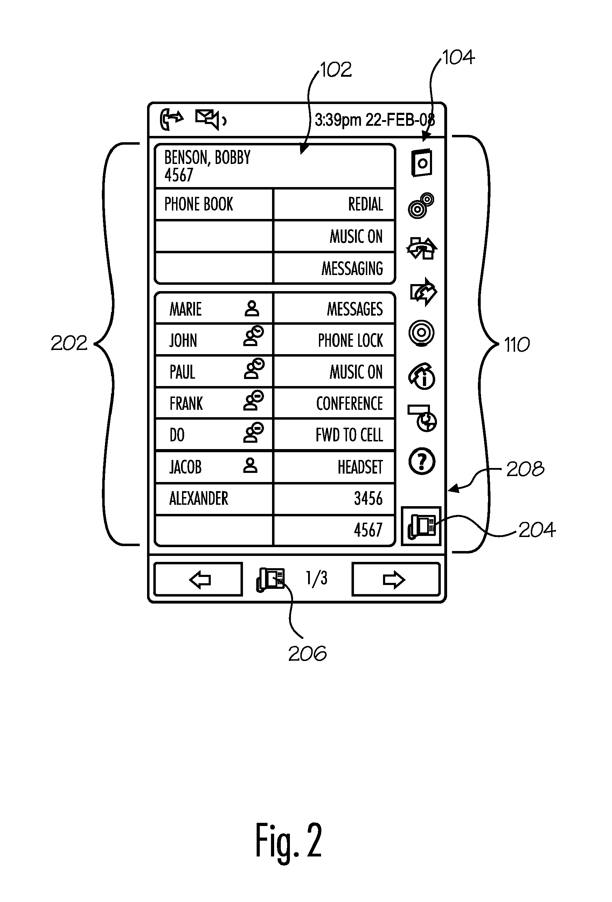

FIG. 2 provides an exemplary illustration showing one embodiment of a graphical user interface 102 that can be displayed on a display screen 106 of the IP phone 100 shown in FIG. 1. In this embodiment, the IP phone GUI 202 is displayed adjacent the sidebar display 104. As illustrated in FIG. 2, the sidebar display may include a number of quick access icons 110 located above an IP phone GUI icon 204. The location of the icons in the sidebar display may be selected by a programmer. Alternatively, a user may select the order of the quick access icons. Due to the importance of the IP phone GUI, which is used to place and receive phone calls, the quick access icon 204 used to open the IP phone GUI may be permanently located at a bottom of the sidebar display. There may be a gap 208 between the IP phone GUI icon 204 and the quick access icons above in the sidebar display to make the IP phone GUI icon easy to locate.

When a quick access icon 110 is activated by touching the icon on a touch screen, or actuating a button adjacent the icon, the IP phone application associated with the icon will be displayed. In addition, the size or appearance of the icon may be changed to provide a visual feedback to a user that the icon has been properly selected.

For example, FIG. 2 shows that the IP phone GUI 102 has been selected and the quick access icon 204 associated with the IP phone GUI has been changed to show that it is depressed, thereby simulating a physical button that has been depressed to allow the user to know that they have properly selected the IP phone GUI. In another embodiment, when a quick access icon is activated to launch an IP phone application, the associated icon may grow bigger and display a spotlight effect on it to indicate which application is currently active. Other graphical changes can also be made, as can be appreciated. In addition, if a currently displayed IP phone application is associated with a quick access icon, the associated quick access icon can also be displayed as an active utility icon 206 at a bottom of the display screen to enable the user to quickly determine the connection between the displayed screen and the associated quick access icon.

The number of quick access icons 110 that can be placed in the sidebar display 104 is dependent upon the size of the icons. When a touch screen is used, the size of the icons is selected to enable a user to easily select a desired icon with a fingertip. If a stylus is used with a touch screen, the size of the icons may be reduced due to the finer point of a stylus relative to a fingertip.

In one embodiment, the sidebar display 104 may be static, allowing a fixed number of quick access icons to be placed within the sidebar. FIG. 2 shows eight quick access icons, plus the IP phone GUI icon substantially filling the sidebar display area. In another embodiments, the sidebar display area may be configured to enable a user to scroll down below the visible area using a scroll bar activated with buttons or by dragging the sidebar display area on a touch screen with a finger or stylus. The ability to scroll the sidebar display enables a user to have significantly more quick access icons than can fit in a single static window.

When an IP phone is turned on, or a new user logs in to an IP phone, a predetermined set of quick access icons 110 can be displayed in the sidebar display 104. The IP phone GUI is typically displayed initially. When the user selects one of the quick access icons 110, the currently opened application is hidden and the IP phone application associated with the quick access icon is then displayed in the area adjacent the sidebar display.

As previously discussed, one common problem with graphical user interfaces in IP phones is data that can be lost due to involuntary switching between applications caused when an automated macro is activated. In accordance with one embodiment of the present invention, when the user selects one of the quick access icons 110, resulting in the associated application being displayed on the IP phone display screen, the context of the previously displayed application can be saved. For example, a user may be editing a contact in the contacts application when a telephone call is received. This results in the IP phone application being automatically displayed and the contact application GUI to be hidden. However, the context of the contact application is retained in memory within the IP phone. The user may re-display the contact application by selecting its associated quick access icon in the sidebar display 104. When the contact application is re-displayed, the contact edit window will reappear in the same state as when it was hidden, containing any information that had previously been entered.

Similarly, a user can switch between applications using the quick access icons 110 in the sidebar display. Unless an application is closed by the user, the context of the application is saved so that when the application is again selected, the application's graphical user interface will appear just as it did when it was hidden by the selection or activation of another application. If the user attempts to open a currently opened application through its quick access icon, the attempt may be ignored and an error tone may be generated in a speaker on the IP phone.

It should be noted that context is not saved if an application is closed. Thus, if a user has completed using a particular application, that application can then be closed. When the application is again opened, the application will display its initial startup screen. However, if the application is not closed, and other applications are opened, then the context of each opened application can be saved to enable a user to quickly pass between different applications using their associated quick access icons in the sidebar display 104. In one embodiment, when two or more applications have been opened, and a currently displayed application is closed, it does not result automatically in the previously viewed application being displayed. Rather, the IP phone GUI is displayed when a currently displayed application is closed. In order to view another application that had been opened, its associated quick access icon can be activated in the sidebar display.

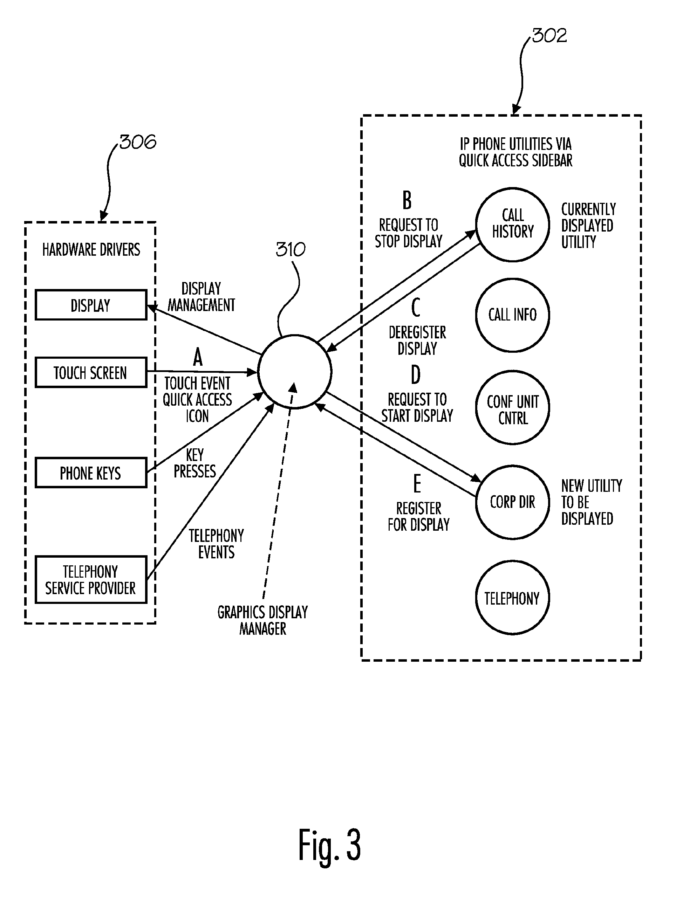

In accordance with one embodiment of the present invention, FIG. 3 provides an exemplary illustration for one process for switching between IP phone applications using the quick access icons located in the sidebar display of an IP phone having a touch screen. FIG. 3 shows an association of the group of quick access icons 302 with the hardware drivers 306 of the IP phone through a graphics display manager 310.

In the example of FIG. 3, the call history application 302 is the application that is currently displayed on the IP phone display screen. When a user invokes a quick access icon in the sidebar display for another application to be displayed, such as the corporate directory application 304, the hardware driver for the touch screen controller passes an event (A) to the graphics display manager 310 component. The display manager component is used to manage the IP phone's graphics display. The event indicates that the corporate directory application's quick access icon was depressed on the touch screen. The display manager then sends a request (B) to the currently displayed application (call history) to stop displaying. In response, the call history application sends a display deregister request (C) to the display manager 310. The display manager then sends a request (D) to the corporate directory application to start displaying on the IP phone's touch screen. The request is responded to by the corporate directory application with a register for display request (E) being sent to the display manager. The display manager then manages removal of the call history display and placement of the corporate directory display on the IP phone's touch screen display. The call history application remains running in memory while it is not displaying such that the call history application can again be displayed in the exact same condition as when its display was turned off and the corporate directory application took over the display.

Applications can register with the graphics display manager 310 for other events as well. For example, applications can register to receive phone key presses or telephony events from the telephony service provider (i.e. an incoming phone call). The applications can be configured to react to selected events regardless of whether the applications are being currently displayed or not. For example, the IP phone application, which provides the basic IP phone GUI, can be triggered to automatically be displayed when there is an incoming phone call regardless of what application is currently using the display. If the user decides that they do not wish to answer the incoming call, the user can switch back to the application they were previously using by pressing the application's associated quick access icon in the sidebar display. In this case, the IP phone application would deregister for display, but would not deregister for telephony events so that it can continue to receive these events even though it is not being displayed. The individual IP phone applications can be configured based on which events are needed to continue to be received while the application is being displayed, and while it is not being displayed based on the needs of the particular application.

The sidebar display 104 and quick access icons 110 are always displayed adjacent whatever application GUI 102 is operating, with a few exceptions. Certain screens may display across the entire display, thereby covering or displacing the sidebar display. For example, a splash screen that is displayed when the phone powers up may be displayed over the entire display screen. A screen saver screen image can also be shown over the entire display. Similarly, a calibration screen used to calibrate a touch screen, an about screen, and a text editing screen may cover the entire display area. The sidebar display area may be minimized when the text editing screen is displayed to only contain the IP phone GUI icon 204 to allow the display of a QWERTY keyboard, which can require a full width of the display screen.

A default set of quick access icons 110 can be displayed when the phone is first powered on. The user can alter the list of utilities and applications accessible through the sidebar using a setup utility that is available as part of the IP phone's settings. The configuration utility can enable a user to change the default set of quick access icons that appear in the sidebar display 104. A user can be presented with a list of available applications that can be activated with an associated quick access icon located in the sidebar display. The applications that can be activated may be both standard applications provided by the IP phone provider, and also third party application providers. The configuration utility can also be used to enable a user to delete quick access icons. The user can also rearrange the order in which the icons appear in the sidebar so that they can display the most frequently used icons in positions that are most easily accessed.

In one embodiment, quick access icons 110 that are displayed as a standard when the IP phone is powered on can include the IP phone GUI, a contacts application used to store contact information, a call history application, a visual voice mail application, a call forwarding application, a device settings application, a conference unit control application used to control a separate teleconference add-on to the IP phone, and a help application.

In addition to the default utilities provided with the phone, additional applications that are developed by 3^{rd} party software development companies that utilize the IP phone's application program interface (API) can be made accessible using quick access icons 110 located in the sidebar display 104, as previously discussed. The IP phone's API can include the ability for a third party application to place their application in the sidebar display. The sidebar configuration utility can include any third party applications in the IP phone's list of available applications that can be placed on the sidebar.

In one embodiment of the present invention, a user's selected configuration of quick access icons 110 in the sidebar display 104 can be stored at a central location. The IP phone can be configured to enable the user to login or logout of each IP phone. When a user logs in to an IP phone located within the same network, the user can recall their selected configuration to provide the same sidebar configuration selected by the user. This enables the user to maintain the same setup that the user is accustomed to throughout the user's company or place of business.

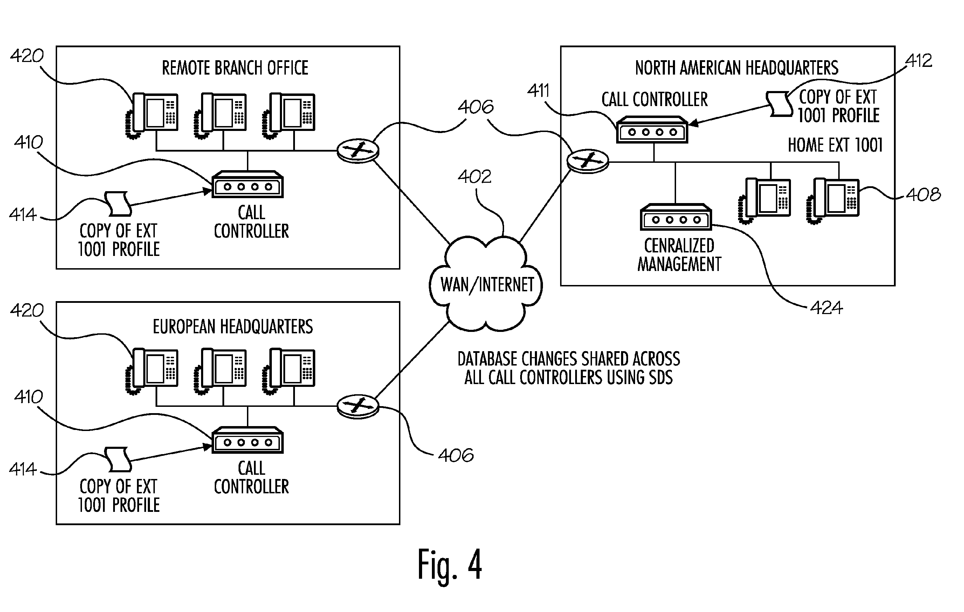

For example, FIG. 4 shows an IP phone network with three separate locations comprising a North American headquarters location, a remote branch office location, and a European headquarters location. The IP phone network at the separate locations is interconnected through a network connection 402 such as a wide area network (WAN), the internet, or other types of network connections. A firewall / network router 406 may be used to connect the IP phone network at each location to the WAN. Each location can include a call controller 410. In the exemplary illustration of FIG. 4, a user's home IP phone 408 is located in the North American Headquarters with an assigned extension number of 1001. The information pertaining to the user's IP phone setup is saved in a user profile 412 in the call controller. The user profile may be identified based on the user's assigned extension number. The user profile can be saved in a database in the call controller attached to their home phone, referred to as their home call controller 411. The information in the user profile 412 can include preferences for the user's quick access icons 110 (FIG. 2) located in the sidebar display 104. The user profile can also include specific third party applications, such as HTML applications or XML applications that are accessible via the sidebar display.

A copy 414 of the user's profile, as stored in the database in the home call controller 411, can be transferred to the databases within other call controllers located at other locations within the IP phone network that are electronically connected via the network 402. In this example, a copy of the user's profile is transferred to the databases in the call controllers in the remote branch office and the European Headquarters. An application can be used to ensure that all copies of a user profile record 414 are kept in sync. As changes are made to one record, the changes are propagated to all copies of the data record on the IP phone network. A centralized management controller 424 can be used to operate a system management application. A system administrator can use the system management application to make changes to the data stored on the call controllers. All of the IP phones and call controllers 410, 411 in the IP phone network are accessible to the system administrator through the centralized management controller.

When the user associated with extension 1001 travels from her home office at the North American Headquarters to another office, such as the European Headquarters, the user can log in to a new phone 420 connected to the call controller 410 at the European Headquarters. Once the user has logged in, the new phone 420 now assumes the user's profile 414, including the quick access icons 110 (FIG. 2) the user selected to be displayed in the IP phone's sidebar display 104 (FIG. 2). All calls placed to the user's extension of 1001 will now be routed to the phone that they are logged in to at the European Headquarters. The user is also provided with access to all of the IP phone applications available via the quick access icons 110 (FIG. 2) on the new phone 420 that the user is logged in to. This enables the user to maintain the increased efficiency offered by the quick access icons in the sidebar display, no matter the user's location within the IP phone network.

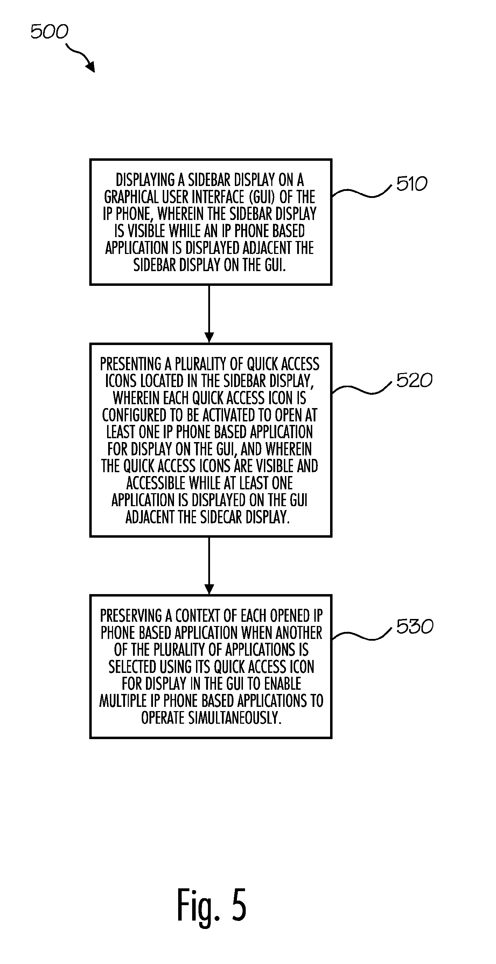

In another embodiment of the present invention, a method 500 for accessing IP phone based applications in an IP phone is disclosed, as depicted in the flow chart of FIG. 5. The method includes the operation of displaying 510 a sidebar display on a graphical user interface (GUI) of the IP phone. The sidebar display is visible while an IP phone based application is displayed adjacent the sidebar display on the GUI. An additional operation includes presenting 520 a plurality of quick access icons located in the sidebar display. Each quick access icon is configured to be activated to open at least one IP phone based application for display on the GUI. The quick access icons are visible and accessible while the at least one application is displayed on the GUI adjacent the sidebar display.

The method 500 additionally includes the operation of preserving 530 a context of each opened IP phone based application when another of the plurality of applications is selected using its quick access icon for display in the GUI to enable multiple IP phone based applications to operate simultaneously, as previously discussed.

This systems and methods disclosed enable the user to select a desired application directly with a single soft button press within an IP phone's touch screen based GUI, thereby eliminating the need to navigate down a menu tree. Access to these quick access icons operable as soft buttons is available substantially all of the time regardless of what application or phone function the user is currently using. This allows the user to switch between applications or between an application and the basic telephony functionality with a single button press at any time. When the user switches from one application to another, their context within the first utility is maintained so the user can continue from where they left off, if and when they return back to the previously displayed application.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A system for accessing internet protocol [hereafter IP] phone based applications on an IP phone in an IP phone network, comprising:
a sidebar display on a graphical user interface [hereafter GUI] of the IP phone, wherein the sidebar display is visible while an IP phone based application is displayed adjacent the sidebar display on the GUI;
a plurality of quick access icons located in the sidebar display, wherein each quick access icon is configured to be activated to open at least one IP phone based application for display on the GUI, and wherein the quick access icons are visible and accessible while the at least one IP phone based application is displayed on the GUI adjacent the sidebar display; and
an application context preservation module operating on the internet protocol phone and configured to enable an application context of each opened IP phone based application to be preserved when another of the at least one IP phone based applications is selected using its quick access icon for display in the GUI.

2. A system as in claim 1, further comprising a user profile having user information to enable a user to login to a selected IP phone connected to the IP phone network to provide the user's quick access icons to be displayed in the sidebar display on the selected IP phone.

3. A system as in claim 2, further comprising a call controller at a selected location of the IP phone network, wherein the user profile is stored in a database of the call controller.

4. A system as in claim 2 or claim 3, further comprising an additional call controller located at additional locations on the IP phone network, wherein the user profile is copied to a database of each additional call controller, and optionally further comprising a system data synchronization module configured to update the user profile module at each location when the user profile is updated by a user at one location.

5. A system as in claim 1, wherein the selected IP phone based application registers for display with a graphics display manager when the associated quick access icon is activated.

6. A system as in claim 1, wherein the selected IP phone based application receives information about user interactions with user inputs on the IP phone and reacts to selected interactions through the graphics display manager.

7. A system as in claim 5, wherein the graphics display manager enables a previous IP phone based application, viewable in the GUI prior to the selected IP phone based application, to de-register for display when the selected IP phone based application is selected.

8. A system as in claim 7, wherein the graphics display manager enables the previous IP phone based application to remain in a digital memory in the IP phone when the selected IP phone based application is viewable in the GUI.

9. A system as in claim 7, wherein the graphics display manager enables data associated with the previous IP phone based application to remain in a digital memory in the IP phone when the selected IP phone based application is viewable in the GUI.

10. A system as in claim 7, wherein the graphics display manager enables the previous IP phone based application to de-register such that the previous IP phone based application does not receive information from user inputs on the IP phone when the selected IP phone based application is viewed.

11. A system as in claim 6, wherein the graphics display manager enables the previous IP phone based application to de-register such that the previous IP phone based application receives selected information from user inputs on the IP phone when the selected IP phone based application is viewed.

12. A method for accessing internet protocol [hereafter IP] phone based applications in an IP phone, comprising:
displaying a sidebar display on a graphical user interface [hereafter GUI] of the IP phone, wherein the sidebar display is visible while an IP phone based application is displayed adjacent the sidebar display on the GUI;
presenting a plurality of quick access icons located in the sidebar display,
wherein each quick access icon is configured to be activated to open at least one IP phone based application for display on the GUI, and wherein the quick access icons are visible and accessible while the at least one application is displayed on the GUI adjacent the sidebar display; and
preserving a context of each opened IP phone based application when another of the plurality of applications is selected using its quick access icon for display in the GUI to enable multiple IP phone based applications to operate simultaneously.

13. A method as in claim 12, further comprising adding information related to the plurality of quick access icons to a user profile to enable a user to login to a selected IP phone connected to an IP phone network to provide the user's quick access icons to be displayed in the sidebar display on the selected IP phone.

14. A method as in claim 13, further comprising saving the user profile to a call controller at a selected location of the IP phone network, and optionally further comprising copying the user profile to additional call controllers located at separate locations on the IP phone network, and optionally further comprising updating the user profile on each call controller when changes are made to the user profile at one of the call controllers.

15. A method as in claim 13, further comprising:
registering the selected IP phone based application for display with a graphics display manager when the associated quick access icon is activated, and/or
de-registering for display a previous IP phone based application that was viewable in the GUI prior to the selected IP phone based application activation, wherein the previous IP phone based application de-registers with the graphics display manager, and optionally also sending selected information from user inputs on the IP phone to the previous IP phone based application after the previous IP phone based application de-registers for display.
